Europäisches Patentamt

European Patent Office

Office européen des brevets

(11) Publication number: **0 312 970**
**A2**

## (12) EUROPEAN PATENT APPLICATION

(21) Application number: 88117278.7

(22) Date of filing: 17.10.88

(30) Priority: 19.10.87 US 110240

(43) Date of publication of application:
26.04.89 Bulletin 89/17

(84) Designated Contracting States:
DE SE

(51) Int. Cl.⁴: **B23C 5/22**

(71) Applicant: GTE VALENITE CORPORATION
750 Stephenson Highway P.O. Box 3950
Troy Michigan 48007-3950(US)

(72) Inventor: Stashko, Daniel R.
10600 Pine Hill Dr.
Holly, MI 48442(US)

(74) Representative: Patentanwälte Grünecker,
Kinkeldey, Stockmair & Partner
Maximilianstrasse 58
D-8000 München 22(DE)

(54) Scalloped chip gullet.

(57) A rotatable cutting tool having an array of indexable inserts separated by chip gullets which provide augmented side wall support for cutting the insert pockets. A series of arcuate surfaces are arranged along the side wall portion of the chip gullets adjoining the support row containing the inserts. Each arcuate surface begins and ends at a point behind a preceding insert thereby strengthening the pocket wall behind each insert.

# FIG. 3

## SCALLOPED CHIP GULLET

### Field of the Invention

The invention pertains to rotary cutting tools having indexable inserts arranged in serial fashion along the axial length of the cutting tool. More particularly, the invention pertains to a means for augmenting the side wall strength of the insert pocket.

### Background of the Invention

Milling technology and more particularly, rotating cutting tools employing indexable inserts have greatly improved the throughput of work material by the ability to introduce a number of cutting edges through indexing as well as an array of carbide materials in their cutting inserts. Typically, a tool includes a number of support rows defined by chip gullets. A series of pockets or recesses are ar rayed in each support row with inserts seated within the pockets and held fast by retaining screws or clamps. When an edge becomes dull or chipped, an operator merely has to release the insert retaining mechanism, i.e., retaining screw and rotate the insert to the next available cutting edge. This may be accomplished a relatively short period of time and at minimal expense in comparison with the regrinding and sharpening of cutting edges integral with the tool body.

The placement of the inserts, in an overlapping arrangement is a generally accepted means by which a series of inserts provides for smooth efficient cutting. Efficiency may also be enhanced by increasing the number of inserts or effective teeth per tool. There are some problems, however, associated with maximizing the number of inserts per tool. For example, in order to increase the number of teeth per tool the peripheral surface area of the tool body making up the support rows must be diminished to be able to carry the additional series of inserts. As each additional insert pocket is machined from the tool body the available support for the tool is reduced. When placed under a load, the inserts often fracture the weakened pocket walls .

One object of the present invention is to provide a rotating cutting tool having indexable inserts wherein the inserts are secured in pockets formed from support rows having an enhanced side wall portion following the insert.

Another object of the present invention is to provide a rotatable cutting tool utilizing indexable inserts in which an enhanced pocket wall is achieved in a manner which is conducive to low-cost manufacturing practices.

A further object of the present invention is to provide a rotatable cutting tool utilizing indexable inserts in which the number of effective cutting teeth is maximized without sacrificing the rate of chip removal from the workpiece.

### Summary of the Invention

Accordingly, the before mentioned objects, features, and advantages illustrated above and claimed henceforth are fulfilled by applicant's cutting tool. The tool comprises a rotary body having an outer periphery and at least one support row defined by chip gullets or chip removal slots. Each support row includes a series of pockets formed in an axial array shaped for receipt of the inserts. The slots abutting the respective sides of the support row form side wall portions. Each of the pockets in the support row open out to one of the side wall portions of the slot such that a cutting inserts fixed within a pocket presents its cutting edge below the periphery of the cutting tool. The remaining side wall portion of the slot abuts with the preceding support row and comprises a series of arcuate surfaces which in one embodiment intersect in an axial orientation at apex points. The support wall and therefore the pocket wall behind the preceding insert is be thereby augmented by the additional material available due to the arcuate shapes of the following side wall portions.

One advantage of the present invention is that the arcuate surfaces formed in the side wall portions are easily manufactured by commonly known methods. For example, a standard end mill may be plunged sequentially into the steel body to produce the desired arcuate side wall portion.

A further advantage of the present invention is that each chip gullet activated by the series of arcuate surfaces on one hand and a side wall surface on the other provides additional support for the insert without obstructing the removal of spent chips from the workpiece.

### Brief Description of the Drawings

The invention is described in detail on the following with references to the accompanying drawings, in which various embodiments are shown by way of example. It is to be understood that these embodiments are only illustrations of the invention and that various modifications thereof may be made within the scope of the claims:

Figure 1 illustrates a side view of a helical end mill with minimal end wall support indicative of prior art practices;

Figure 2 illustrates a axial cross-sectional view of Figure 1 through line 2-2;

Figure 3 illustrates a side view of one embodiment of the present invention;

Figure 4 illustrates a cross-sectional axial view through line 3-3;

Figure 5 illustrates a side view of the preferred embodiment;

Figure 6 illustrates a side-view at an alternate embodiment.

Detailed Description of a Preferred Embodiment

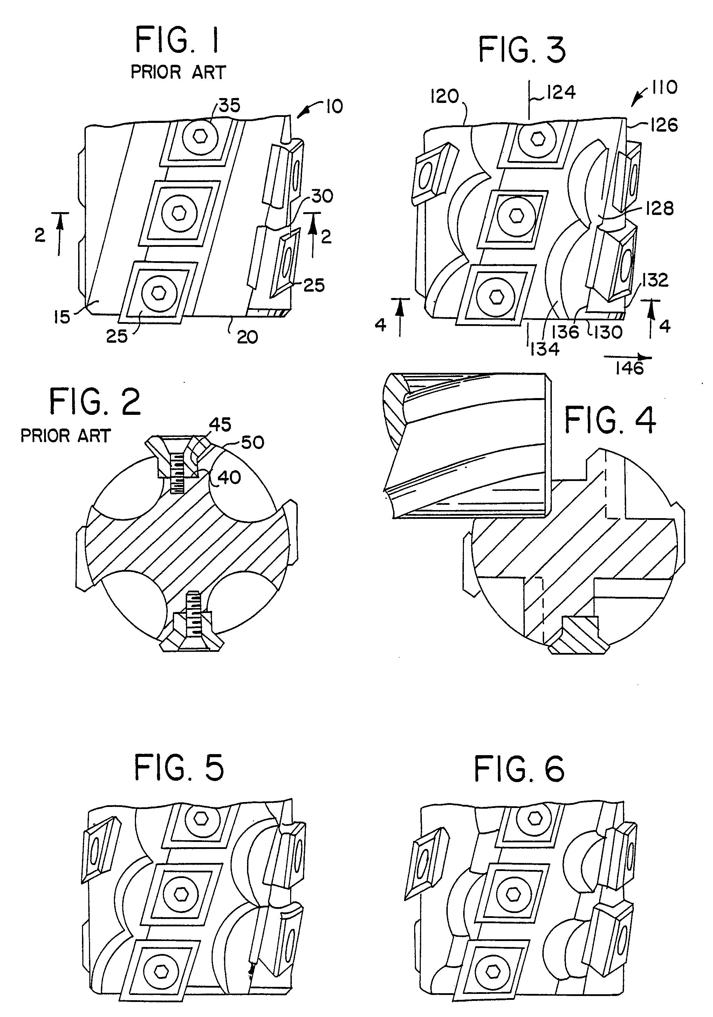

Figures 1 and 2 illustrate a rotatable cutting tool 10 and more specifically an end mill. These tools utilize symmetrical chip gullets or slots 15 which extend fully to the distal end 20 of end tool body. A series of indexable cutting inserts 25 are seated in recessed pockets 30 and retained therein by recessed retainer screws 35. The pockets are machined to include a seating face 40 for the insert and a number of abutment walls 45 which together with the retainer screw serve to fixedly restrain the insert during operation.

Figure 2 illustrates a cutting tool arranged with an optimum number of inserts. Optimization of cutting performance however remains available support material from the pocket walls 45 in an effort to maximize the number of inserts thereby weakening the support surfaces for the insert. Figure 2 illustrates a typical fracture of the rear wall 50 of an insert pocket resulting from these prior art conditions.

Figure 3 illustrates a preferred embodiment of applicant's invention. A cutting tool 110 is generally illustrated and includes a tool body 120, rotational about axis 124 having a periphery 126. The cutting tool includes a number of chip gullets or slots 128 which extend to the distal end 130 of cutting tool 120. Interdisposed with the slots and thereby defined thereby are support rows 132. Each of the respective slots are defined by at least two oppositely opposed side wall portions 134 and 136. The side wall portions therefore not only define the boundaries of the slots but also delineate the position of the support rows.

Side wall surface 136 abuts with preceding support row 132 and comprises a series of arcuate surfaces. These arcuate side wall sections are integral with the preceding support row 132 as discussed hereafter. The arcuate surfaces are positioned so as to open in the direction of arrow 146 and meet or intersect with each other at a point behind a preceding insert to provide an enhanced pocket wall for insert support. An alternate embodiment as shown in Figure 6 includes the use of a series of arcuate side wall portions 136 spaced from each other by a section of side wall 148 oriented parallel to the adjoining support row. This embodiment provides additional support for the insert where the cutting tool is subject to harsh or difficult cutting materials such as titanium.

Referring now to Figure 4, arcuate surfaces 136 are formed by plunging an end mill 150 into body 120 at distinct points along the length of the tool body to form an intersecting series of arcuate surfaces arrayed in helical fashion as discussed above. This method is relatively inexpensive and utilizes tools commonly employed by most tool manufacturers in the production of helical rotatable cutting tools. By intersecting the ends of each arcuate surface 136 behind a preceding insert 155 (see Fig. 3), additional support is provided for an insert. Although an array of dimensions are contemplated by the inventor, each arcuate surface includes the diameter which circumscribes an area at least as great as that of the preceding insert. This provides for the minimal amount of room necessary for adequate chip removal. The maximum diameter of the arcuate surface (and, therefore, the depth of slot 128) depends in part on the sizing of cutting tool 120. Those of ordinary skill in the art will recognize that the need for providing adequate depth to the slot 128 without removing excessive quantities of tool stock. In the preferred embodiment, the arcuate surfaces have a diameter which exceeds the inserts axial length by at least 10% of the inserts total length.

The cutting tool 120 is rotatable about a central axis 124 in the direction of arrow 138 (see Fig. 3) and fed radially in the direction of the arrow 140.

Specifically, the cutter tool 110 includes a cylinderical metal body 120 having a mounting shank (not shown) at its upper end and four angularly-spaced chip gullets or chip round slots 128 extending therefrom to the distal end 136.. In one embodiment, the slots 128 alternating open to the bottom end plane 142 of body 120 while the remaining slots have ends which are spaced upwardly from the ends of body 120.

The cutter which has been illustrated is commonly referred to as a helical end mill in that each slot 128 extends helically along and around the axis 124 of the tool 110. Each of the inserts in the respective support rows 132 are formed from a block of suitable cutting material such as tungsten carbide. The inserts are adjacent helical slot 128 which opens in the end plane 142 of body 120. In one embodiment, the inserts include a series of parallelogram or diamond-shaped inserts 144. While it will be apparent to those of ordinary skill in the art that other geometric inserts may be employed by this invention including those possessing arcuate or circular cutting edges. Likewise, any number of inserts employing at least one land area are also contemplated by this invention.

Each of the inserts 144 are seated in a recessed pocket within support row 132 such that the cutting edge extends downwardly beyond the end of the plane of the cutter body 120 at an angle of between about 3° to about 20° to provide a lead cutting edge for entering the metal material of the workpiece.

In one embodiment (see Fig. 3), the parallelogram insert 144 is supported in a pocket defined by a flat seating face with side support surface which intersects with the seating face about its periphery. At least one pair of flat indexing surfaces are present in the side wall surface oriented with sides parallel. In an alternate embodiment, the inserts 144 are supported in a pocket defined to include a frusto-conical bore or seat having edges forming a 60° conical configuration, terminating in a lower cylindrical portion. Each insert 144, is held in place by a screw inserted through the center of each insert and threaded into the cutting tool body 120. Other means of securing the insert to the cutting tool body are known to those of ordinary skill in the art.

The inserts in each slot 128 are located and axially spaced, side-by-side relation and also are spaced circumferentially from one another. Because of the circumferential spacing, the inserts in each slot do not engage the workpiece simultaneously, but instead move into progressive engagement with the workpiece as the cutter tool 120 rotates.

Each of the inserts in adjacent slots are also staggered axially. Thus, the active cutting edge of the innermost insert in each of the slots axially expands the gap between one of the inserts in end adjacent slot. As a result of the staggered arrangement of the inserts in adjacent slots, the workpiece material which is left uncut between adjacent inserts of one slot is wiped away or cut by the intervening insert in the following slot.

## Claims

1. A cutting tool comprising a rotary body having an outer periphery, at least one axially extending support row defined by at least two axially external slots formed in its outer periphery, each of said slots having two oppositely opposed side walls,

a plurality of cutting inserts arranged in series, one above the other, each disposed in one of said side support rows,
one of said side walls in preceding abutment with said support row,
said remaining side wall comprising a series of arcuate surfaces which intersect each other at an apex,
said apex positioned behind a preceding insert to provide an enhanced side wall portion which resists fracture due to forces on the insert during operation.

2. A cutting tool as set forth in claim I wherein said inserts have a cutting edge which is positioned in said support row below said periphery.

3. A cutting tool as set forth in claim 1 wherein said arcuate surfaces are axially spaced by a section of side wall oriented parallel to said adjoining support row.

4. A cutting tool as set forth in claim I wherein said side wall portions define a chip gullet.

5. A cutting tool as set forth in claim 1 wherein said insert is disposed in a pocket at an included angle with respect to a plane passing through the axis of rotataion of about 5 degrees.

6. A cutting tool as set forth in claims 2 and 3 wherein said arcuate surfaces include a diameter which circumscribes an area at least as great as that of the preceding insert.

7. A cutting tool as set forth in claim 3 wherein said slot has a width of at least an area of as great as a radius which circumvents the preceding insert.

8. A cutting tool as set forth in claim 7 wherein said arcuate surfaces include an axial diameter which circumscribes an area at least as great as that of said insert.

9. A cutting tool as set forth in claim 1 wherein at least one of said inserts includes a curved cutting edge.

10. A cutting tool comprising a rotary body having an outer peripheral,
at least one axially extending support row defined by at least two axially extending support row defined by at least two axially extending slots formed in its outer periphery,
each of said slots having two oppositely opposed side walls,
a plurality of cutting inserts arranged in series, one above the other, disclosed in one of said support rows,
one of said side wall in preceding abutment with said support row,
said remaining side wall comprising a series of _..cuate surfaces which intersect each other at an apex,
said apex positioned behind a preceding insert to provide an enhanced side wall portion which resists fracture due to forces on the insert during operation.,

said arcuate surfaces having a diameter which exceeds said inserts axial length by at least 10%.

11. A cutting tool comprising a rotary body having an outer periphery,

at least one axially extending support row defined by at least two axially external slots formed in its outer periphery,

each of said slots having two oppositely opposed side walls,

a plurality of cutting inserts arranged in series, one above the other, each disposed in one of said side support rows,

one of said side walls in preceding abutment with said support row,

said remaining side wall comprising a series of arcuate surfaces which intersect each other at an apex,

said apex positioned behind a preceding insert to provide an enhanced side wall portion which resists fracture due to forces on the insert during operation.

said arcuate section axially spaced by a slot wall-oriented parallel to said adjoining support roll.

12. A cutting tool as set forth in claim 9 and 10 wherein at least one of said inserts includes a flat cutting edge.

13. A cutting tool as set forth in olaim 9 and 10 wherein at least one of said inserts includes a curved cutting edge.

# FIG. 1
PRIOR ART

35

10

2

2

30

25

15

25

20

# FIG. 2
PRIOR ART

45
50
40

# FIG. 3

120

124

110

126

128

132

4

136 130

134

4

146

# FIG. 4

# FIG. 5

# FIG. 6